(19) Europäisches Patentamt
European Patent Office
Office européen des brevets

(11) **EP 4 336 071 A1**

(12) **EUROPEAN PATENT APPLICATION**

(43) Date of publication:
**13.03.2024 Bulletin 2024/11**

(21) Application number: **23195876.0**

(22) Date of filing: **07.09.2023**

(51) International Patent Classification (IPC):
**F16H 61/28** (2006.01)

(52) Cooperative Patent Classification (CPC):
**F16H 61/2807;** F16H 59/68; F16H 63/38;
F16H 2061/283; F16H 2342/02; F16H 2342/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.09.2022 IT 202200018345**

(71) Applicant: **CNH Industrial Italia S.p.A.**
**10156 Torino (IT)**

(72) Inventors:
• **CINQUEPALMI, Maria Paola**
  **10156 Turin (IT)**
• **GUIDETTI, Marco**
  **10156 Turin (IT)**
• **BERSELLI, Alberto**
  **10156 Turin (IT)**

(74) Representative: **CNH Industrial IP Department**
**Leon Claeysstraat 3A**
**8210 Zedelgem (BE)**

(54) **METHOD FOR ESTIMATING A VALVE CHARACTERISTIC FOR AN ACTUATOR SYSTEM OF A WORK VEHICLE TRANSMISSION**

(57)    Method for characterization of a valve for an actuator system (1) for a work vehicle, the method comprising the following steps:
i) the electronic control units provides a first current value $i_N$, wherein N is 0 at start, suitable to move moving shaft (3) along its longitudinal axis A in order to allow plunger (9) to move towards the shoulder (12);
ii) position sensor means reads the position value $x_N$ corresponding to the applied current value $i_N$;

iii) if the electronic control unit verifies that position value $x_N$ is equal to zero, the index N is increased of one and the method return back to step i), otherwise
if the electronic control unit verifies that position value $x_N$ is different from zero, estimates the pressure imparted by actuation means (5);
iv) the electronic control unit store the pressure-current data and stop the characterization method.

FIG. 1

**Description**

TECHNICAL FIELD

The present invention concerns a method for estimating a valve characteristic, in particular a method for estimating a valve characteristic for an actuator system of a work vehicle transmission such as an agricultural vehicle.

The present invention finds its preferred, although not exclusive, application in transmission for a work vehicle. Reference will be made to this application by way of example below.

BACKGROUND OF THE INVENTION

Transmission architectures for work vehicles such as agricultural vehicles use synchronizer elements configured to engage or disengage shafts of the transmission. In particular, power shift transmission use a large number of such synchronizer elements.

Such transmission architecture comprise hydraulic actuators configured to apply a force to the parts of the synchronizer elements in order to engage or disengage the elements connectable by this latter. In particular, such force is controlled by electro-actuated valves that regulate the passage of actuation fluid.

However, known transmission architectures do not comprise pressure sensor configured to detect pressure of the activation of such electro valves.

In particular, even if the valve current-pressure characteristics can be assumed linear with the same slope for all valves, the current need to activate the valve can be different.

This variation implies that for the same current control signal the activation pressure may vary of some bars, thereby leading to different newton of applied force to the synchronizer element parts.

The aforementioned discrepancy may lead to different problems, namely:

- Mechanical stresses, due to a force higher than the needed that reduce globally the durability of the synchronizer element parts;
- Increased wear, due to a force lower than the needed that increase the friction of friction material parts of the synchronizer element; and
- Wrong synchronization, i.e. a wrong synchronization force may lead to an incorrect neutral or engaged actuation of the synchronizer thereby causing problems to the overall transmission and thereby reducing the driving quality.

In view of the above, the need is felt to address the problems due to the different characteristic of activation of valves that control synchronizer elements in a transmission without using pressure sensors that would need a complex and costly installation.

An aim of the present invention is to satisfy the above mentioned needs in a cost-effective and optimized manner.

SUMMARY OF THE INVENTION

The aforementioned aim is reached by method for characterization of an actuator valve for a transmission of a work vehicle as claimed in the appended set of claims.

BRIEF DESCRIPTION OF DRAWINGS

For a better understanding of the present invention, a preferred embodiment is described in the following, by way of a non-limiting example, with reference to the attached drawings wherein:

- Figure 1 is a perspective view of a portion of an actuator system for a synchronizer element of a transmission of a work vehicle;
- Figure 2 comprises schematic sectional views of a portion of the actuator system of figure 1 in different operational configurations;
- Figure 3 is a graph plotting pressure in function of current of actuation in a valve of the actuator system of figure 1; and
- Figure 4 is a schematic flowchart of a valve characterization method according to the invention.

DETAILED DESCRIPTION OF THE INVENTION

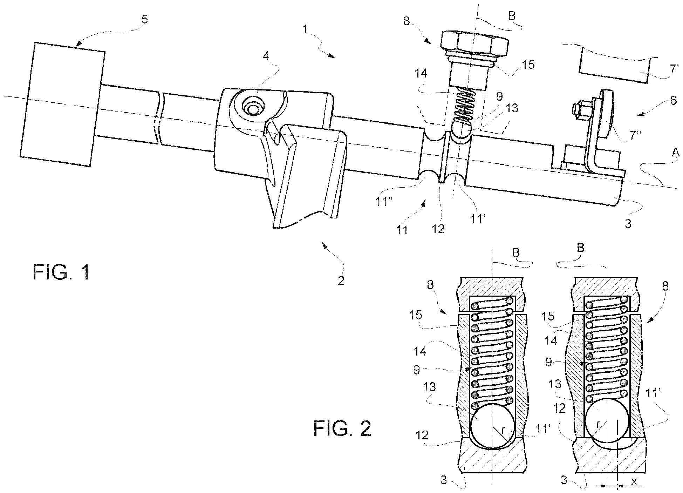

In figure 1 it is partially shown an actuator system 1 for a synchronizer element 2 for a transmission architecture (not shown) of a work vehicle (not shown). In particular, the transmission architecture comprises a synchronizer configured to selectively engage or disengage an element of the transmission with respect to another one.

The actuator system 1 comprise essentially a moving shaft 3 supported in translational free manner by the vehicle along its longitudinal axis A.

The synchronizer element 2 comprises at least a portion 4 that is fixedly carried by the moving shaft 3 and therefore moves along longitudinal axis A direction to control the engagement or disengagement of the portions of synchronizer element 2.

The actuator system 1 comprises actuation means 5 configured to move the moving shaft 3 along longitudinal axis A. In particular, such actuation means 5 comprise a valve (not show into detail) that is controlled via an electric input signal.

The actuator system 1 further comprises sensor means 6 configured to detect the movement of the moving shaft 3. In particular, the sensor means 6 comprises a magnet 7' configured to generate a magnet field and a target 7", that is fixedly carried by moving shaft 3, configured to detect the aforementioned magnet field.

Therefore, according to a control signal provided by an electronic control unit (not shown) as defined below, actuation means 5 control the movement of moving shaft 3.

The actuator system 1 further comprise detent means 8 configured to maintain the moving shaft in at least two predefined positions, i.e. engaged or disengaged position of the synchronizer element 2. In particular, in the shown embodiment two predefined positions are discussed while it is clear that three predefined positions may be defined, i.e. adding a so-called "neutral" position of the synchronizer element 2.

Detents means 8 comprises a plunger 9 configured to engage a seat 11 carried by moving shaft 3 and in particular directly realized on the moving shaft 3. In particular, the moving shaft 3, as said, comprises at least two seats 11', 11'' realized to house the plunger 9 along a direction of an axis B that is preferably perpendicular to longitudinal axis A.

The seats 11', 11'' are longitudinally adjacent along longitudinal axis A and separated by a shoulder 12. In particular, they have a curved shape configured to allow rotation motion of the plunger 9 as defined below in detail.

The plunger 9 essentially comprise a spherical element 13 and elastic means 14 such as a helicoidally spring. The elastic means 14 are configured to carry said spherical element 13, e.g. by contact, and to exert a force on this latter in order to be always in contact with the profile of the moving shaft 3, i.e. either with one of seats 11', 11'' or with shoulder 12 during the movement between the two seats 11', 11''.

The plunger 9 is advantageously housed in a carcass 15 that is fixedly carried by the vehicle and defines a housing for the elastic means 14 and the spherical element 13.

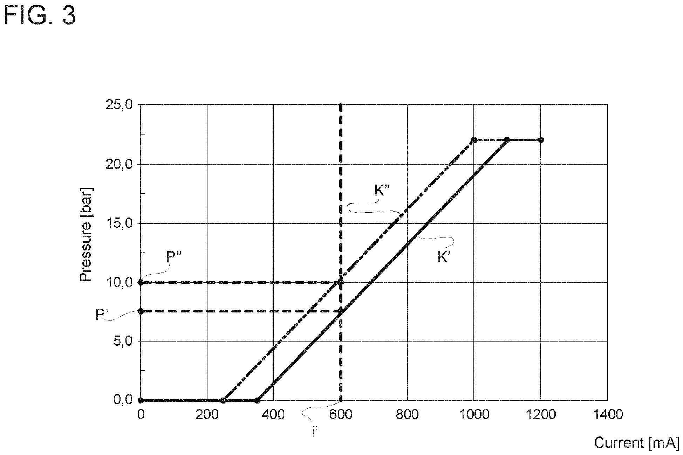

Making reference to figures 2A and 2B and to graph of figure 3, the following quantities are defined:

- x is the linear distance of the movement of the moving shaft 3 along longitudinal axis A detected by sensor means 6;
- r is the radius of the spherical element 13;
- i' is the current signal applied to actuator means 5 that generate an x movement of the moving shaft 3;
- p', p'' is the pressure exerted to the portion 4 of the synchronizer element 2 due to input current i'; and
- k', k'' is the slope of the valve characteristic by plotting pressure values in function of applied current signal.

In addition to the above, the aforementioned distance is the distance of the center of the radius r of the spherical element 13 with respect to the middle axis of the seat 11', 11''.

The electronic control unit may be part of the actuator system and/or of the transmission and/or of the vehicle and comprises elaboration means configured to memorize at least some of the above listed quantities and to acquire data from the aforementioned position sensor means.

The operation of the above described actuator system 1 is the following.

During the operation of the transmission of the work vehicle, the moving shaft 3 is controlled by actuator means 5 to move along longitudinal axis A thereby controlling the engagement of transmission elements via portion 4. The current signal i' is imparted to actuation means thereby allowing the passage of the moving shaft 3 so that detent means 8 maintain the latter in the at least two aforementioned positions, i.e. so that the plunger 9 is seated in one of seats 11. The current signal i' is provided in function of the needed pressure at synchronizer element 2 by a characterization mapping that is memorized in the electronic control unit of the transmission/vehicle.

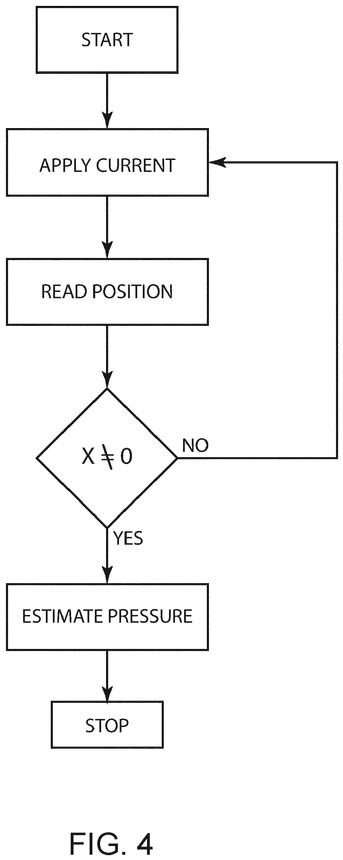

In particular, the invention relates to a characterization method, schematized in figure 4, for valve means of an actuator system 1 as described above and comprising the following steps:

i) the electronic control units provides a first current value $i_N$, wherein N is 0 at start, suitable to move moving shaft 3 along its longitudinal axis A in order to allow plunger 9 to move towards the shoulder 12;
ii) position sensor means reads the position value $x_N$ corresponding to the applied current value $i_N$;
iii) if the electronic control unit verifies that position value $x_N$ is equal to zero, the index N is increased of one and the method return back to step i), otherwise
if the electronic control unit verifies that position value $x_N$ is different from zero, estimates the pressure imparted by actuation means 5;
iv) the electronic control unit store the pressure-current data and stop the characterization method.

In particular, the first current value may be a value of 200 mA and the subsequent increase may be of 1 mA for instance each 2 ms

Such value of subsequent increases may be modified by the user, acting on the electronic control unit, to tune the quality of the detected valve characteristic.

The estimation of the pressure at point iv) imparted by valve means may be estimated as follows.

Pressure exerted by hydraulic actuation means to control synchronizer element depends on the area A of the hydraulic actuation means (i.e. the piston axial area) multiplied by hydraulic force imparted by the hydraulic actuation means, that is contrasted by plunger means 9 force, i.e.

$$P = A * F$$

The force exerted by the plunger means 9 depends on the vertical compression Y of elastic means 14 along axis B multiplied by elastic means stiffness, k:

$$F = k * Y$$

The vertical compression Y of the elastic means 14 along axis B may be estimated in function of detected distance x and of memorized radius r:

$$Y = f(x(i), r)$$

Such function may be memorized in the electronic control unit and clearly varies in function of the dimensions of plunger/seats i.e. of radius r.

Therefore, in the end, the pressure may be directly linked to the control current signal provided to the magnet.

$$P = A * k * f(x(i), r)$$

The aforementioned method is advantageously executed by the electronic control unit at a specific condition, i.e. at any requested characterization of the actuator system 1 or at its first operation or after any maintenance.

The aforementioned method can also be executed by the electronic control unit at any suitable predefined timing to ensure continuous correct data linked to the valve characteristic.

The aforementioned method may further comprise the update of a characterization map memorized in the electronic control unit with the characterization current-pressure point retrieved by the aforementioned method. In other words, the starting point of the slope of the valve is updated.

In view of the foregoing, the advantages of method for characterization of an actuator valve for a transmission of a work vehicle according to the invention are apparent.

Making reference to figure 3, the above described method allows to estimate the different starting of the inclination k', k" of each valve. Indeed, as shown, different valve means in the same transmission architecture, even if equal, or the same valve mean after a long usage, may lead, via the same input current signal i' to different pressure p', p" as output.

In particular, the above effect is reached without using any pressure sensor downstream to valve means, thereby reducing costs and encumbrance of the transmission.

Accordingly, the above mentioned characterization method may be provided in any typology of transmission with small modifications, without increasing costs.

Since the valve characteristic may be calibrated at each needed occurrence, the accuracy in controlling synchronizer element is increased,

It is clear that modifications can be made to method for characterization of an actuator valve for a transmission of a work vehicle which do not extend beyond the scope of protection defined by the claims.

For example, the plunger may be realized differently or, as said, the seats may be more than two.

Furthermore, the function relating the compression of elastic means related to longitudinal movement of the moving shaft may be of any typology.

Distance sensor means may be realized of any suitable typology.

Moreover, as outlined, the timing of execution of the method and the current steps may vary according to the need of the typology of vehicle and its use.

**Claims**

1. Method for characterization of a valve for an actuator system (1) for a work vehicle,

   said actuator system (1) comprising a shaft (3) moving along a longitudinal axis (A) and actuator means (5) provided with a valve to move said shaft (3),
   said actuator system (1) comprising detent means (8) comprising a plunger (9) configured to be housed in one among a plurality of seats (11', 11") fixedly carried by said shaft (3) and separated by a shoulder (12), said plunger (9) comprising a spherical element (13) configured to cooperate by contact with one among said plurality of seats (11', 11") and elastic means (14) configured to exert a force to maintain said spherical element (13) in contact with said one among said plurality of seats (11', 11")
   said actuator system (1) further comprising position sensor means (6) configured to detect the position of said spherical element
   said work vehicle comprising an electronic control unit comprising elaboration means configured to memorize quantities related to said actuator system (1) and to acquire data from said position sensor means (6), said method comprising the following steps:

      i) the electronic control units provides a first current value $i_N$, wherein N is 0 at start, suitable to move moving shaft (3) along its longitudinal axis A in order to allow plunger (9) to move towards the shoulder (12);
      ii) position sensor means reads the position value $x_N$ corresponding to the applied current value $i_N$;
      iii) if the electronic control unit verifies that position value $x_N$ is equal to zero, the index N is increased of one and the method return back to step i), otherwise
if the electronic control unit verifies that position value $x_N$ is different from zero, estimates the pressure imparted by actuation means (5);
iv) the electronic control unit store the pressure-current data and stop the characterization method.

2. Method according to claim 1, wherein he first current value is 200 mA.

3. Method according to claim 1 or 2, wherein the subsequent increase of current value is of 1 mA.

4. Method according to claim 3, wherein the subsequent increase is executed each 2 ms.

5. Method according to claim 1 or 2, wherein the value of said subsequent increases are tunable by the user.

6. Method according to any of the aforementioned claims, wherein the estimation of said pressure is obtained by the following formula

$$P = A * k * f(x(i), r)$$

wherein:

- A is the area of a hydraulic actuator controlled by valve means;
- k is the stiffness of the elastic means (14);
- f(x(i), r) is a predefined function of the detected longitudinal displacement x and a radius r of said spherical element (13).

the aforementioned values A, k, r, and the function f(x(i), r) being memorized in said electronic control unit.

7. Method according to any of the preceding claims, wherein the aforementioned steps are executed according to a specific condition.

8. Method according to any of the preceding claims, wherein the aforementioned steps are executed according to a specific condition.

9. Method according to the any of the preceding claims, further comprising the step of updating of a characterization map memorized in the electronic control unit by the current-pressure value stored in step iv).

10. Electronic control unit comprising elaboration means configured to memorize and execute the method according to any of the preceding claims.

11. Transmission for a work vehicle comprising an actuator system (1) for a synchronizer element of said transmission, said actuator system (1) comprising a shaft (3) moving along a longitudinal axis (A) and actuator means (5) provided with a valve to move said shaft (3),

said actuator system (1) comprising detent means (8) comprising a plunger (9) configured to be housed in one among a plurality of seats (11', 11") fixedly carried by said shaft (3) and separated by a shoulder (12), said plunger (9) comprising a spherical element (13) configured to cooperate by contact with one among said plurality of seats (11', 11") and elastic means (14) configured to exert a force to maintain said spherical element (13) in contact with said one among said plurality of seats (11', 11"), said actuator system (1) further comprising position sensor means (6) configured to detect the position of said spherical element said work vehicle, said transmission comprising an electronic control unit comprising elaboration means configured execute the aforementioned characterization method.

12. Work vehicle comprising a transmission provided with a synchronizer element (2) and an actuator system (1) for said synchronizer element (2), said actuator system (1) comprising a shaft (3) moving along a longitudinal axis (A) and carrying a portion (4) for carrying said synchronizer element (2) and actuation means (5) provided with a valve configured to move said shaft (3),

said actuator system (1) comprising detent means (8) comprising a plunger (9) configured to be housed in one among a plurality of seats (11', 11") fixedly carried by said shaft (3) and separated by a shoulder (12), said plunger (9) comprising a spherical element (13) configured to cooperate by contact with one among said plurality of seats (11', 11') and elastic means (14) configured to exert a force to maintain said spherical element (13) in contact with said one among said plurality of seats (11', 11"), said actuator system (1) further comprising position sensor means (6) configured to detect the position of said spherical element said work vehicle, said work vehicle comprising an electronic control unit comprising elaboration means configured execute the aforementioned characterization method.

FIG. 1

FIG. 2

FIG. 3

```
                    ┌─────────────┐
                    │    START    │
                    └──────┬──────┘
                           │
                           ▼
                    ┌─────────────┐
                    │APPLY CURRENT│◄──────────┐
                    └──────┬──────┘           │
                           │                  │
                           ▼                  │
                    ┌─────────────┐           │
                    │READ POSITION│           │
                    └──────┬──────┘           │
                           │                  │
                           ▼                  │
                          ╱╲                  │
                         ╱  ╲       NO         │
                        ╱ X≠0╲───────────────┘
                        ╲    ╱
                         ╲  ╱
                          ╲╱
                           │ YES
                           ▼
                ┌──────────────────┐
                │ ESTIMATE PRESSURE│
                └────────┬─────────┘
                         │
                         ▼
                    ┌─────────┐
                    │  STOP   │
                    └─────────┘
```

FIG. 4

Europäisches
Patentamt

European
Patent Office

Office européen
des brevets

# EUROPEAN SEARCH REPORT

Application Number

EP 23 19 5876

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 2 849 129 A1 (RENAULT SA [FR]) 25 June 2004 (2004-06-25) | 1-5,7-12 | INV. F16H61/28 |
| A | * the whole document * | 6 | |
| X | EP 1 887 258 A1 (PEUGEOT CITROEN AUTOMOBILES SA [FR]) 13 February 2008 (2008-02-13) | 1-5,7-12 | |
| A | * paragraphs [0010], [0011]; figures * | 6 | |

**TECHNICAL FIELDS
SEARCHED      (IPC)**

F16H

The present search report has been drawn up for all claims

| Place of search | Date of completion of the search | Examiner |
|---|---|---|
| Munich | 13 December 2023 | Meritano, Luciano |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................
& : member of the same patent family, corresponding
    document

EPO FORM 1503 03.82 (P04C01)

**EP 4 336 071 A1**

## ANNEX TO THE EUROPEAN SEARCH REPORT
## ON EUROPEAN PATENT APPLICATION NO.

EP 23 19 5876

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2023

| Patent document cited in search report | | Publication date | Patent family member(s) | | Publication date |
|---|---|---|---|---|---|
| FR 2849129 | A1 | 25-06-2004 | NONE | | |
| EP 1887258 | A1 | 13-02-2008 | EP | 1887258 A1 | 13-02-2008 |
| | | | FR | 2904674 A1 | 08-02-2008 |

EPO FORM P0459

For more details about this annex : see Official Journal of the European Patent Office, No. 12/82